# EUROPÄISCHE PATENTSCHRIFT

(11) **EP 1 924 629 B1**
(45) Veröffentlichungstag und Bekanntmachung des Hinweises auf die Patenterteilung: **08.10.2008**
(21) Anmeldenummer: 06806733.9
(22) Anmeldetag: 21.08.2006
(51) Int. Cl.: C08G 65/26

(54) **VERFAHREN ZUR HERSTELLUNG VON POLYETHERALKOHOLEN**
METHOD FOR PRODUCTION OF POLYETHER ALCOHOLS
PROCEDE POUR PRODUIRE DES POLYETHER-ALCOOLS

(30) Priorität: 30.08.2005 DE 102005041142
(43) Veröffentlichungstag der Anmeldung: 28.05.2008
(73) Patentinhaber: BASF SE, 67056 Ludwigshafen (DE)
(72) Erfinder: OSTROWSKI, Thomas, 68199 Mannheim (DE); LÖFFLER, Achim, 67346 Speyer (DE); RUPPEL, Raimund, 01099 Dresden (DE)
(86) Internationale Anmeldenummer: PCT/EP2006/065472
(87) Internationale Veröffentlichungsnummer: WO 2007/025881

(56) Entgegenhaltungen:
- WO-A-01/44347
- DD-A1- 275 695
- US-A- 5 648 559

## Beschreibung

Gegenstand der Erfindung ist ein Verfahren zur Herstellung von Polyetheralkoholen unter Verwendung von DMC-Katalysatoren.

Polyetheralkohole sind wichtige Einsatzstoffe bei der Herstellung von Polyurethanen. Ihre Herstellung erfolgt zumeist durch katalytische Anlagerung von niederen Alkylenoxiden, insbesondere Ethylenoxid und/oder Propylenoxid, an H-funktionelle Starter.

Als Katalysatoren werden zumeist lösliche basische Metallhydroxide oder Salze eingesetzt, wobei Kaliumhydroxid die größte praktische Bedeutung hat. Nachteilig bei der Verwendung von Kaliumhydroxid als Katalysator ist vor allem, dass bei der Herstellung von hochmolekularen Polyetheralkoholen zur Bildung von ungesättigten Nebenprodukten kommt, die die Funktionalität der Polyetheralkohole herabsetzen und sich bei der Herstellung von Polyurethanen sehr nachteilig bemerkbar machen.

Zur Senkung des Gehaltes an ungesättigten Anteilen in den Polyetheralkoholen und zur Erhöhung der Reaktionsgeschwindigkeit bei der Anlagerung von Propylenoxid ist es bekannt, als Katalysatoren Multi-, vorzugsweise Doppelmetallcyanidverbindungen, insbesondere Zinkhexacyanometallate, einzusetzen. Diese Katalysatoren werden häufig auch als DMC-Katalysatoren bezeichnet. Es gibt eine große Zahl von Veröffentlichungen, in denen derartige Verbindungen beschrieben wurden.

Die unter Verwendung von Multimetallcyanidverbindungen hergestellten Polyetheralkohole zeichnen sich durch einen sehr geringen Gehalt an ungesättigten Bestandteilen aus. Ein weiterer Vorteil beim Einsatz von Multimetallcyanidverbindungen als Katalysatoren besteht in der deutlich erhöhten Raum-Zeit-Ausbeute bei der Anlagerung der Alkylenoxide.

Die Herstellung von Polyetheralkoholen mit Hilfe der DMC-Technologie kann sowohl im batchweisen als auch im kontinuierlichen Verfahren erfolgen.

Kontinuierliche Verfahren zur Herstellung von Polyetheralkoholen unter Verwendung von DMC-Katalysatoren sind bekannt. So beschreibt DD 203 735 ein Verfahren zur kontinuierlichen Herstellung von Polyetheralkoholen unter Verwendung von DMC-Katalysatoren, bei dem eine Startsubstanz, die einen aktivierten DMC-Katalysator enthält, kontinuierlich in einen Rohrreaktor dosiert, im Verlaufe des Rohrreaktors ein- oder mehrmals Alkylenoxid zugegeben und am Ende des Reaktors kontinuierlich der fertige Polyetheralkohol entnommen wird. Bei diesem Verfahren muss in einem gesonderten Verfahrensschritt in einem anderen Reaktor die aktivierte Startsubstanz erzeugt werden.

DD 203 734 beschreibt ein Verfahren zur Herstellung von niedermolekularen Alkylenoxid-Anlagerungsprodukten, die einen aktivierten DMC-Katalysator enthalten. Bei diesem Verfahren wird zunächst der Katalysator mit Alkylenoxid aktiviert und nach dem Anspringen der Reaktion so lange Alkylenoxid und niedermolekularer Alkohol in den Reaktor dosiert, bis das gewünschte Molekulargewicht erreicht ist.

In WO 97/29146 wird ein Verfahren zur Herstellung von Polyetheralkoholen unter Verwendung von DMC-Katalysatoren beschrieben, bei dem in einem Reaktor die Anlagerung von Alkylenoxiden an die H-funktionelle Startsubstanz gestartet wird und zu dieser reagierenden Mischung kontinuierlich weitere Startsubstanz und Alkylenoxid dosiert wird. Der fertige Polyetheralkohol wird nach der Anlagerung dem Reaktor entnommen.

In WO 98/03571 wird ein Verfahren zur kontinuierlichen Herstellung von Polyetheralkoholen unter Verwendung von DMC-Katalysatoren beschrieben. Dabei wird einem kontinuierlich arbeitenden Reaktor kontinuierlich Startsubstanz und Alkylenoxid zugeführt und kontinuierlich der fertige Polyetheralkohol entnommen.

Nachteilig bei allen beschriebenen Verfahren zur kontinuierlichen Herstellung von Polyetheralkoholen ist es, dass der Aufbau der Polyetherkette nicht variiert werden kann. Es ist nur die Anlagerung eines Alkylenoxids oder einer vorgegebenen Mischung von Alkylenoxiden möglich.

In WO 00/14143 und WO 99/44739 werden DMC-Katalysatoren beschrieben, die auf feste Träger aufgebracht beziehungsweise zu Formkörpern verformt werden. Mittels dieser Katalysatoren kann ebenfalls eine kontinuierliche Herstellung von Polyetheralkoholen, beispielsweise bei Anordnung der Katalysatoren in einem Festbett, erfolgen. In WO 99/44739 wird beschrieben, dass die Umsetzung in mehreren hintereinander angeordneten Abschnitten erfolgen kann. Die Herstellung der DMC-Katalysatoren in der in diesen Dokumenten beschriebenen Ausgestaltung ist jedoch umständlich, und die Standzeiten derartiger geträgerter Katalysatoren sind unzureichend. Derartige Verfahren haben sich daher in der Praxis nicht durchgesetzt.

Für verschiedene Einsatzgebiete von mittels DMC-Katalysatoren hergestellten Polyetheralkoholen ist eine Modifizierung der Polyetherkette, insbesondere am Kettenende, erforderlich. Die für die Herstellung von Polyurethan-Weichschaumstoffen verwendeten Polyetherole weisen üblicherweise Polyetherketten mit einer Mischung von Ethylenoxid und Propylenoxid auf. Insbesondere für die Verwendung der Polyetheralkohole in Blockweichschaumstoffen ist bei DMC-Polyetheralkoholen die Anlagerung von Propylenoxid am Kettenende bevorzugt, um die Reaktivität der Polyetheralkohole bei der Herstellung der Schaumstoffe einzustellen. Derartige Polyetheralkohole werden beispielsweise in WO 01/16209 beschrieben.

Für Anwendungen im HR-Bereich sind im Gegensatz dazu Polyole mit einem hohen Gehalt an reaktiven primären OH-Endgruppen notwendig. Diese werden bei der Verwendung von Kaliumhydroxid als Katalysator dadurch erzeugt, dass nach einem Block aus Propylenoxid ein Block aus Ethylenoxid dosiert wird. Hierdurch wird ein Teil der sekundären OH-Gruppen in primäre OH-Gruppen umgewandelt. Diese Vorgehensweise ist bei der DMC-Technologie nicht direkt anwendbar, da eine gleichmäßige Anlagerung von Ethylenoxid an die vorhandenen sekundären Hydroxylgruppen nicht gelingt. Statt dessen scheint sich eine einmal gebildete primäre OH-Gruppe stark bevorzugt mit weiterem EO umzusetzen, so dass aufgrund von Inkompatibilitäten trübe und nicht verarbeitbare Produkte entstehen.

Um diese Problematik zu umgehen, wurde in der Literatur, beispielsweise in US 5,144,093, vorgeschlagen, die Ethoxylierung statt mit einem DMC-Katalysator mittels alkalischer Katalyse vorzunehmen. Zur Anwendung kommen dabei starke Basen, vorzugsweise Kaliumhydroxid. Hiermit gelingt zwar die gleichmäßige Anlagerung von Ethylenoxid, allerdings ist eine Katalysatorentfernung, beispielsweise durch Fällung mit Säuren oder Entfernung durch Adsorbentien notwendig, was zu zusätzlichen Kosten führt. Ein Vorteil der DMC-Katalyse, die fehlenden Aufarbeitung, entfällt damit. Weiterhin ist ein zusätzlicher Reaktor notwendig, um eine Querkontamination des DMC durch die Basen zu vermeiden. Die Herstellung des Alkoholats durch einen Destillationsschritt führt zur Verlängerung der Zykluszeiten bzw. erfordert zusätzliche Apparate, beispielsweise eine Kolonne.

Aus WO 01/44347 ist ein Verfahren bekannt, mit dem auch unter DMC-Katalyse eine Erhöhung des Gehalts an primären OH-Gruppen erreicht wird. Hierbei wird eine zeitliche Änderung der Zusammensetzung eines Gemisches aus Ethylenoxid und Propylenoxid vorgenommen. Hierdurch wird Ethylenoxid zum Ende der Dosierung angereichert, was sich in einem erhöhten Gehalt an primären OH-Gruppen ausdrückt. Dieses Verfahren stellt allerdings hohe Anforderungen an die Güte der Reaktorsteuerung, da bei abweichenden Regelungen der beiden Dosierströme für Ethylenoxid und Propylenoxid ein zu hoher Gehalt an Ethylenoxid im Gemisch resultiert, was unter Umständen die Bildung von trüben Nebenprodukten zur Folge haben kann. Die Schwierigkeiten bei der Regelungstechnik werden zudem dadurch erhöht, dass sich die Dosiergeschwindigkeit zumindest eines Alkylenoxids zeitlich ändert. Weiterhin muss gewährleistet werden, dass beide Dosierströme am Ende der Reaktion zeitgleich beendet werden, um Überdosierungen zu vermeiden. Wird Propylenoxid nachdosiert, so kann ein Teil der gebildeten primären OH-Gruppen wieder in sekundäre OH-Gruppen umgewandelt werden. Eine Nachdosierung von Ethylenoxid kann die Bildung von trüben Nebenprodukten bewirken.

Es bestand daher die Aufgabe, ein technisch realisierbares und robustes Verfahren zu entwickeln, mit dem ein hoher Gehalt an primären OH-Gruppen in den Polyetheralkoholen erreicht wird wodurch die Produkte für die Verwendung in HR-Rezepturen geeignet sind.

Die Aufgabe konnte gelöst werden durch ein Verfahren zur Herstellung von Polyetheralkoholen mittels DMC-Katalysatoren, bei dem in einem ersten Schritt kontinuierlich oder batchweise ein Vorprodukt hergestellt wird, an das in einem zweiten Schritt in einem Rohrreaktor an mindestens zwei Dosierstellen Gemische aus Ethylenoxid und Propylenoxid angelagert werden, wobei das Verhältnis von Ethylenoxid und Propylenoxid in den an den unterschiedlichen Dosierstellen eindosierten Gemischen unterschiedlich ist sind und das im zweiten Schritt dosierte Gemisch zumindest an der letzten Dosierstelle mindestens 40 Gew.-% Ethylenoxid enthält.

Gegenstand der Erfindung ist demzufolge ein Verfahren zur Herstellung von Polyetheralkoholen durch katalytische Anlagerung von Ethylenoxid und Propylenoxid an H-funktionelle Startsubtanzen unter Verwendung von DMC-Katalysatoren, dadurch gekennzeichnet, dass in einem ersten Schritt Propylenoxid oder ein Gemisch aus Propylenoxid und Ethylenoxid an H-funktionelle Startsubstanzen angelagert wird und das so entstandene Produkt in einen Rohrreaktor überführt wird, in dem an mindestens zwei Dosierstellen Gemische aus Ethylenoxid und Propylenoxid zudosiert werden, wobei die Anteile von Ethylenoxid und Propylenoxid in den im ersten und im zweiten Schritt zudosierten Gemischen unterschiedlich sind, im zweiten Schritt die Anteile von Ethylenoxid und Propylenoxid in den zudosierten Gemischen an mindestens zwei Dosierstellen unterschiedlich sind und das im zweiten Schritt dosierte Gemisch zumindest an der letzten Dosierstelle mindestens 40 Gew.-% Ethylenoxid enthält.

Die Anzahl der Dosierstellen beträgt dabei vorzugsweise 2 bis 10, besonders bevorzugt 3 bis 8 und insbesondere 4 bis 6. Die Dosierstellen sind am Strömungsrohr so angebracht, dass zumindest zwei der Dosierstellen in Strömungsrichtung des Rohrreaktors hintereinander angebracht sind. Wie beschrieben, enthält das im zweiten Schritt dosierte Gemisch zumindest an der letzten Dosierstelle mindestens 40 Gew.-% Ethylenoxid.

Die Dosierstellen sind vorzugsweise als Düsen ausgestaltet. Die Zuführung der Alkylenoxide zu den Düsen erfolgt vorzugsweise über Pumpen, wobei die Alkylenoxide vor den Pumpen vermischt und als Gemisch dosiert werden oder den Düsen über separate Pumpen zugeführt werden können.

Zur Gewährleistung eines Plug-Flows innerhalb des Rohrreaktors ist es vorteilhaft, vor den Dosierstellen für die Alkylenoxide Mischer einzubauen, die nach dem "split and recombine" Prinzip arbeiten. Vorzugsweise werden Mischer ohne bewegliche Teile, auch als statische Mischer bezeichnet, eingesetzt. Beispielsweise können statische Mischer der Firma Sulzer verwendet werden.

Die Zusammensetzung der im zweiten Schritt zudosierten Gemische aus Ethylenoxid und Propylenoxid können prinzipiell an den unterschiedlichen Dosierstellen gleich oder verschieden sein.

So ist es prinzipiell möglich, ein Gemisch von Ethylenoxid und Propylenoxid mit gleichen Zusammensetzungen zu dosieren, um Produkte zu erhalten, die innenliegende Ethylenoxid-Einheiten enthalten, so dass diese Produkte für die Herstellung von Blockweichschaumstoffen verwendet werden können. Bevorzugt ist es jedoch, den Anteil an Ethylenoxid in den zudosierten Mischungen zum Ende des Reaktors der zweiten Stufe hin anzureichern, um hierdurch Produkte zu erhalten, die zum Kettenende hin einen erhöhten Anteil an Ethylenoxid aufweisen, was zu reaktiven Polyolen führt. Diese Produkte werden für die Herstellung von Formweichschaumstoffen verwendet.

Für den Rohrreaktor der zweiten Stufe ist es entscheidend, dass dieser eine ausreichend hohe Wärmeabfuhrleistung besitzt. Dies kann erreicht werden, indem der Reaktor beispielsweise als Rohrbündelreaktor ausgeführt wird. Die Wärmeabfuhr kann unter anderem durch Siedekühlung erreicht werden. Weiterhin muss gewährleistet werden, dass eine turbulente Strömung im Reaktor der zweiten Stufe vorherrscht, was entweder durch hohe Strömungsgeschwindigkeiten oder durch die Verwendung von Mischelementen oder Schüttungen realisiert werden kann.

Wie bereits ausgeführt, kann der erste Schritt des erfindungsgemäßen Verfahrens kontinuierlich oder batchweise durchgeführt werden.

Bei der batchweisen Fahrweise der ersten Stufe des erfindungsgemäßen Verfahrens sind bevorzugte Rektoren Rührkessel.

Bevorzugt wird bei der batchweisen Ausgestaltung der ersten Stufe des erfindungsgemäßen Verfahrens das Produkt der ersten Stufe in einen Behälter überführt, aus dem das Produkt kontinuierlich entnommen und der zweiten Stufe zugeführt wird.

Bei der kontinuierlichen Fahrweise der ersten Stufe des erfindungsgemäßen Verfahrens sind bevorzugte Rektoren kontinuierlich arbeitende Rührkessel, Rohrreaktoren oder Strömungs- beziehungsweise Schlaufenreaktoren.

Weiterhin können auch Strahlschlaufenreaktoren mit Gasphase und externen Wärmetauschern, wie beispielsweise in EP 419419 beschrieben, oder internen Wärmetauscherrohren, wie in WO 01/62826 beschrieben, verwendet werden. Darüber hinaus können gasphasenfreie Loop-Reaktoren eingesetzt werden.

Bei der Dosierung der Edukte ist eine gute Verteilung der Edukte, d.h. der Alkylenoxide, Starter und Katalysatorsuspension notwendig. Dies kann bei Rührkesselreaktoren durch die Verwendung von Ringverteilern geschehen, die unterhalb des Rührers oder zwischen die erste und die zweite Rührerebene eingebaut werden

Derartige Reaktoren sind beispielsweise in JP H6-16806, DD 207 253, WO 01/62826, WO 01/62825 und WO 01/62824 beschrieben.

In einer bevorzugten Ausführungsform des erfindungsgemäßen Verfahrens werden in der ersten Stufe des Verfahrens kontinuierlich arbeitende Rührkessel eingesetzt, insbesondere solche mit einem außenliegenden Wärmetauscher.

Dabei werden dem Reaktor in bekannter Weise kontinuierlich Startsubstanz, Alkylenoxide und DMC-Katalysator zugeführt und das Endprodukt der ersten Stufe entnommen und in den Rohrreaktor überführt

Zwischen beiden Reaktionsstufen können beispielsweise zusätzliche Wärmetauscher installiert werden. Weiterhin kann eine Vorrichtung installiert werden, mit der zusätzlicher Katalysator, der von dem in der ersten Stufe verwendeten Katalysator verschieden sein kann, dosiert werden. Schließlich können zusätzliche Hilfsstoffe wie Stabilisatoren oder Lösungsmittel dosiert werden.

Falls notwendig kann auch eine Strippingeinheit zwischen beiden Stufen installiert werden, um Reste der Alkylenoxide aus dem Zwischenprodukt abzutrennen. Diese Strippingeinheit kann beispielsweise in Form einer Kolonne oder eines Flash-Strippers ausgeführt sein.

In einer weiteren Ausführungsform wird das Produkt zwischen beiden Reaktionsstufen gelagert und erst später in den Rohrreaktor dosiert.

Bevorzugt haben die nach dem erfindungsgemäßen Verfahren hergestellten Polyetheralkohole einen Gehalt an Ethylenoxid von 3 bis 50 Gew.-%, bezogen auf das Gewicht des Polyetheralkohols.

Vorzugsweise werden im ersten Verfahrensschritt zwischen 40 und 98 Gew.-%, besonders bevorzugt 50 bis 95 Gew.-% und insbesondere 60 bis 90 Gew.-% der gesamten eingesetzten Menge an Alkylenoxiden und im zweiten Verfahrenschritt die Restmenge des Alkylenoxids eingesetzt, wobei sich die Mengen der in den beiden Stufendes erfindungsgemäßen Verfahrens eingesetzten Alkylenoxide zu 100 Gew.-% ergänzen.

Vorzugsweise wird im ersten Verfahrensschritt Propylenoxid oder besonders bevorzugt eine Mischung aus Ethylenoxid und Propylenoxid eingesetzt. Das Verhältnis von Propylenoxid zu Ethylenoxid liegt dabei vorzugsweise zwischen PO:EO= 30:70 und PO:EO= 98:2.

Je nach Erfordernis kann dem Produkt aus der ersten Verfahrensstufe vor der Überführung in den Rohrreaktor weiterer DMC-Katalysator zugegeben werden. Ebenso ist es möglich, im Verlaufe der zweiten Stufe des erfindungsgemäßen Verfahrens weiteren Katalysator, insbesondere DMC-Katalysator, zuzusetzen

Nach Verlassen des Rohrreaktors der zweiten Stufe des erfindungsgemäßen Verfahrens wird das Endprodukt aufgearbeitet. Zur Aufarbeitung gehört beispielsweise die Entfernung von leicht flüchtigen Bestandteilen, die auch als Geruchsstoffe wirken können, üblicherweise durch Vakuumdestillation, Wasserdampf- oder Gasstrippen und oder andere Methoden der Desodorierung. Hierbei ist es vorteilhaft, das Strippen unmittelbar an die Dosierung der Alkylenoxide, möglichst jedoch nicht später als 12 Stunden nach der Beendigung der Dosierung der Alkylenoxide durchzuführen. Falls erforderlich, kann auch eine Filtration erfolgen. Die Entfernung leichtflüchtiger Nebenkomponenten kann sowohl batchweise als auch kontinuierlich erfolgen. Bei dem erfindungsgemäßen Verfahren wird eine kontinuierliche Entfernung der Geruchsstoffe bevorzugt.

Es ist möglich, den Katalysator aus dem Polyetheralkohol zu entfernen. Für die meisten Einsatzgebiete kann er jedoch im Polyetheralkohol verbleiben. Prinzipiell möglich, wenn auch nicht bevorzugt, ist es, den DMC-Katalysator abzutrennen und in Schritt a) wieder einzusetzen, wie beispielsweise in WO 01/38421 beschrieben. Diese Verfahrensweise ist jedoch für die großtechnische Herstellung von Polyetheralkoholen meist zu aufwendig.

Weiterhin ist es üblich, den Polyetheralkohol gegen den thermooxidativen Abbau zu stabilisieren. Dies erfolgt üblicherweise durch den Zusatz von Stabilisatoren, zumeist sterisch gehinderten Phenolen und/oder Aminen.

Als Startsubstanzen kommen H-funktionelle Verbindungen zum Einsatz. Insbesondere werden Alkohole mit einer Funktionalität von 1 bis 8, vorzugsweise 2 bis 8, eingesetzt. Zur Herstellung von Polyetheralkoholen, die als Einsatzstoffe für Polyurethan-Weichschaumstoffe eingesetzt werden, kommen als Startsubstanzen vorzugsweise Alkohole mit einer Funktionalität von 2 bis 6, insbesondere von 2 und 3, zum Einsatz. Beispiele sind Glyzerin, Diglyzerin, Butandiol, Diethylenglykol, Triethylenglykol, Dipropylenglykol, Tripropylenglykol, Sorbitol, Trimethylolpropan und Rizinusöl. Bei der Anlagerung der Alkylenoxide mittels DMC-Katalysatoren ist es vorteilhaft, zusammen mit oder an Stelle von den genannten Alkoholen deren Umsetzungsprodukte mit Alkylenoxiden, insbesondere Propylenoxid, einzusetzen. Insbesondere bei der batchweisen Fahrweise und beim Reaktionsstart der kontinuierlichen Fahrweise der ersten Verfahrensstufe werden bevorzugt Alkoxylierungsprodukte der Alkohole eingesetzt, um Verzögerungen beim Reaktionsstart zu unterdrücken. Derartige Verbindungen haben vorzugsweise eine Molmasse bis maximal 1000 g/mol. Die Anlagerung der Alkylenoxide bei der Herstellung dieser Umsetzungsprodukte kann mit beliebigen Katalysatoren erfolgen, beispielsweise mit basischen Katalysatoren. Hierbei ist jedoch eine gründliche Aufarbeitung der Alkoxylierungsprodukte erforderlich, da bereits Spuren von Basen den DMC-Katalysator desaktivieren.

Die für das erfindungsgemäße Verfahren eingesetzten DMC-Katalysatoren sind bekannt und beispielsweise in EP 743 093, EP 755 716, EP 862 947, EP 862 997 oder EP 1 021 453 beschrieben. Die Katalysatoren können amorph oder kristallin sein. Unter den kristallinen DMC-Katalysatoren sind solche mit einer monoklinen Kristallstruktur bevorzugt.

Der Katalysator wird vorzugsweise in einer Menge von 15 bis 100 ppm, insbesondere in einer Menge von 20 bis 80 ppm, jeweils bezogen auf die Gesamtmasse des Polyetheralkohols, eingesetzt.

Prinzipiell kann in den beiden Stufen des erfindungsgemäßen Verfahrens mit der gleichen Endkonzentration an DMC-Katalysator gearbeitet werden. Vorzugsweise wird in der zweiten Stufe mit der im Vorprodukt verbliebenen Menge an DMC-Katalysator weitergearbeitet. In einer weiteren Ausführungsform kann, wie ausgeführt, dem Vorprodukt vor der zweiten Stufe weiterer DMC-Katalysator zugesetzt werden. Dies kann an einer oder mehreren Stellen erfolgen.

Vorzugsweise wird der Katalysator nur einmal in den ersten Reaktor dosiert. Die Katalysatormenge ist so einzustellen, dass eine ausreichende katalytische Aktivität für beide Verfahrensschritte gegeben ist. Der Katalysator wird vorzugsweise in Form einer etwa 5 %-igen Katalysatorsuspension dosiert. Das Katalysatorsuspensionsmittel kann beispielsweise das Produkt aus dem ersten Schritt oder das Endprodukt des erfindungsgemäßen Verfahrens sein. Das Molekulargewicht des für die Suspension verwendeten Polyetheralkohols sollte identisch oder kleiner als das Molgewicht des Endprodukts des Prozesses sein, um Inhomogenitäten im Endprodukt auszuschließen.
Aus dem gleichen Grund sollte die Zusammensetzung des für die Suspension verwendeten Polyetheralkohols identisch mit dem Endprodukts des Prozesses sein.

Die Anlagerung der Alkylenoxide erfolgt in beiden Schritten bei den üblichen Bedingungen, bei Temperaturen im Bereich von 60 bis 180°C, bevorzugt zwischen 90 und 140°C, insbesondere zwischen 100 und 130°C und Drücken im Bereich von 0 bis 20 bar, bevorzugt im Bereich von 0 bis 10 bar und insbesondere im Bereich von 0 bis 5 bar. Die beiden Verfahrensschritte können bei identischen oder verschiedenen Temperaturen ausgeführt werden. Die im Reaktor zum Reaktionsstart vorgelegte Mischung aus Startsubstanz und DMC-Katalysator kann vor Beginn der Dosierung der Alkylenoxide gemäß der Lehre von WO 98/52689 durch Strippen vorbehandelt werden.

Die für den Anwendungsbereich in HR-Schaumstoffen bevorzugten Polyetheralkohole besitzen OH-Zahlen zwischen 60 und 18, bevorzugt zwischen 40 und 20 mg KOH/g. Die Polyole enthalten zwischen 1 und 30 %, bevorzugt zwischen 5 und 25 % Ethylenoxid. Vorzugsweisebesitzen weisen diese Polyole Gehalte an primären Hydroxylgruppen zwischen 5 und 70 %, bevorzugt zwischen 10 und 60 % auf. Die Molgewichtsverteilungen sind mit D-Werten zwischen 1,1 und 1,5 schmal. Die Viskositäten sind, wie bei Polyetheralkoholen üblich, abhängig von OH-Zahl, Funktionalität und dem Gehalt an Ethylenoxid. Bei OH-Zahlen um 25 mg KOH/g und einem Gehalt an Ethylenoxid von 15 Gew.-% werden bei einer Funktionalität von drei Viskositäten um 1500 mPas erhalten.

Die Funktionalitäten der Polyole sind für die Verarbeitbarkeit und die Schaumeigenschaften von entscheidender Wichtigkeit. In Anlehnung an die Funktionalitäten von HR-Polyolen auf KOH-Basis haben sich in Schaumuntersuchungen bei Einsatz von Polyolen, hergestellt nach dem erfindungsgemäßen Verfahren, Funktionalitäten von 2,2 bis 2,9 als sinnvoll herausgestellt. Diese Funktionalitäten lassen sich beispielsweise durch Startermischungen von Glyzerin mit Diolen oder Monolen einstellen. Insbesondere die Verwendung von Mischungen von Diol und Triol, beispielsweise Diethylenglykol und Glyzerin, hat sich als sehr vorteilhaft für die Verwendung im Schaumstoff herausgestellt. Dies ist überraschend, da es in dieser Hinsicht prinzipielle Strukturunterschiede zwischen KOH- und DMC-Polyolen gibt. Die Monole in KOH-Polyolen bilden sich kontinuierlich während der Reaktion und weisen eine breite Molekulargewichtsverteilung auf. Bei Verwendung von DMC-Katalysatoren ist es nicht möglich, diese breite Molekulargewichtsverteilung zu erreichen, da aufgrund der differentiellen Katalyse identische Molekulargewichte resultieren. Die Verwendung von Triol/Diol-Mischungen als Starter führte allerdings zu Polyolen, mit denen sich analoge Schaumstoffparameter realisieren lassen.

Die Umsetzung der nach dem erfindungsgemäßen Verfahren hergestellten Polyetheralkohole zu Polyurethanen, bevorzugt Weichschaumstoffen, insbesondere HR-Schaumstoffen, erfolgt nach üblichen Verfahren durch Umsetzung mit Polyisocyanaten in Anwesenheit der üblichen Katalysatoren, Treibmittel und Hilfs- und/oder Zusatzstoffe. Die Herstellung der Schaumstoffe kann als Blockschaumstoff oder als Formschaumstoff erfolgen. Die so hergestellten Schaumstoffe finden insbesondere in der Möbel- und der Kraftfahrzeugindustrie als Polstermaterial Verwendung.

Die nach dem erfindungsgemäßen Verfahren hergestellten Polyetheralkohole können problemlos zur Herstellung von Formschaumstoffen, insbesondere HR-Schaumstoffen, eingesetzt werden. Die Eigenschaften der so hergestellten Schaumstoffe entsprechen denen von Schaumstoffen, die unter Verwendung von herkömmlichen Polyetheralkoholen hergestellt wurden.

Das erfindungsgemäße Verfahren ist einfach durchführbar und unempfindlich gegen Störungen.

Die Erfindung soll am den nachstehenden Beispielen näher beschrieben werden.

### Beispiel 1 - (Vergleich)

Zunächst wurde ein Propoxylat aus Glyzerin und Diethylenglykol mit einer OH-Zahl von 141 mg KOH/g unter Verwendung von Kalilauge als Katalysator hergestellt. Dazu wurden in einem druckbeständigen Reaktor (20 barg) 15,77 kg Glyzerin und 6,06 kg Diethylenglykol vorgelegt und anschließend 750 g festes Kaliumhydroxid dosiert. Bei einem Druck von 10 mbar wurde 4 h bei 120 °C entwässert. Nach dem Brechen des Vakuums mit Stickstoff wurden bei 120 °C binnen 9 h 228 kg Propylenoxid dosiert. Nach Beendigung der Nachreaktionsphase wurde das Rohpolyol neutralisiert, indem 2 % Wasser und 5 % Macrosorb^{®}, jeweils bezogen auf den Gesamtansatz, dosiert wurden. Das Wasser wurde im Vakuum bis zu einem Wassergehalt von 0,02 Gew.-% entfernt und der Feststoff über einen Tiefenfilter abgetrennt. Das Produkt wies eine OH-Zahl von 141,3 mg KOH/g auf, die Alkalität lag unter der Nachweisgrenze von 1 ppm K⁺.

Dieses Propoxylat diente auch zur Suspendierung des eingesetzten DMC-Katalysators, hergestellt gemäß Beispiel 1 von EP862947. 10 kg Propoxylat wurden vorgelegt, der feuchte Filterkuchen des DMC-Katalysators dosiert und die Suspension mittels eines UltraTurrax^{®} ca. 20 min dispergiert. Anschließend wurde die Suspension im Vakuum getrocknet (ca. 4 h, 10 mbar). Die trockene Suspension wies einen Katalysatorgehalt von 6,63 Masse-% auf.

9,75 kg des mittels KOH-Katalyse hergestellten Propoxylats wurden in einem 250 kg Reaktor (max 10 bar) vorgelegt und 0,377 kg der Suspension des DMC-Katalysators dosiert. Der Reaktor wurde mittels Stickstoff inertisiert und auf 130 °C aufgeheizt. Anschließend wurden innerhalb von 4 Stunden parallel Glyzerin/DEG-Gemisch (Glyzerin: 2,51 kg, DEG: 0,966 kg) und Propylenoxid (74,27 kg) dosiert. Es schloss sich ein reiner Propylenoxid-Block an (97,47 kg), der innerhalb von 2 h dosiert wurde. Dieses Zwischenprodukt wies eine OH-Zahl von 37,8 mg KOH/g auf.

Das erhaltene Reaktionsprodukt wurde in ein Strömungsrohr mit einer Länge von insgesamt 1,79 m und einem inneren Durchmesser von 25 mm überführt. Der Reaktor bestand aus insgesamt 7 einzelnen Doppelmantelrohren von jeweils 256 mm Länge, die einzeln über Kryostaten temperiert werden konnten. Zur Gewährleistung eines Plug-Flows wurden innen einzelne statische Mischer der Firma Sulzer, Modell SMX, eingebaut. Nach den statischen Mischern wurden die Alkylenoxide zugeführt, wobei diese über Düsen in den Strömungsrohrreaktor eingebracht wurden. Die Alkylenoxide wurden über jeweils getrennte HPLC-Pumpen gefördert.

Das Propoxylat mit der OH-Zahl von 37,8 mg KOH/g wurde über eine Zahnradpumpe mit einer Dosiergeschwindigkeit von 1,5 kg/h bei einer Temperatur von 130 °C in das Strömungsrohr dosiert. An den fünf Dosierstellen wurden konstante Verhältnisse von Ethylenoxid und Propylenoxid eingestellt. Die Dosiergeschwindigkeiten von Propylenoxid und Ethylenoxid an jeder Einspritzstelle lagen bei 67,7 (Propylenoxid) bzw. 42,3 (Ethylenoxid) g/h. Bei der letzten Einspritzstelle wurde die Dosiermenge reduziert, um die notwendige OH-Zahl erreichen zu können; das Verhältnis von PO zu EO blieb konstant. Es konnte keine lokale Temperaturerhöhung nachgewiesen werden. Das Produkt am Ende des Strömungsrohrreaktors wurde in einem Entgasungsbehälter (10 L) aufgefangen, der bei einem Druck von 200 mbara und einer Temperatur von 130 °C betrieben wurde. Hieraus wurde das entgaste Produkt absatzweise in einen weiteren Entgasungsbehälter (10 L, p= 10 mbara, T= 130 °C) gesaugt und schließlich entleert. Das fertige Produkt wies eine OH-Zahl von 28,1 mg KOH/g, eine Viskosität von 970 mPas und einen Gehalt an primären OH-Gruppen von 14 mol-% auf. Die Messung des EO-Gehalts mittels ¹H-NMR-Spektroskopie ergab einen Wert von 10 Ma-%.

### Beispiel 2 - (Erfindungsgemäß)

Es wurden die gleiche Apparatur und die gleichen Reagenzien wie in Beispiel 1 verwendet. Allerdings wurden im Strömungsrohrreaktor lokal unterschiedliche Verhältnisse von Ethylenoxid und Propylenoxid dosiert, die in Tabelle 1 zusammengefasst sind. Das Profil wurde so eingestellt, dass der Anteil an Ethylenoxid zum Ende der Dosierung zunahm.

Das resultierende Polyol wies eine OH-Zahl von 28,2 mg KOH/g auf, einen primären OH-Gehalt von 21 Mol-% und eine Viskosität von 1102 mPas auf. Das Polyol war klar und ließ sich problemlos in HR-Schaumrezepturen verarbeiten.

### Beispiel 3-(Vergleich).

Es wurde die gleiche Apparatur wie in Beispiel 1 verwendet.

Es wurde zunächst ein Propoxylat aus Glyzerin und Diethylenglykol mit einer OH-Zahl von 141 mg KOH/g unter Verwendung von Kaliumhydroxid als Katalysator hergestellt. Dazu wurden in einem druckbeständigen Reaktor (20 barg) 15,77 kg Glyzerin und 6,06 kg Diethylenglykol vorgelegt und anschließend 750 g festes Kaliumhydroxid dosiert. Bei einem Druck von 10 mbara wurde ca. 4 h bei 120 °C entwässert. Nach dem Brechen des Vakuums mit Stickstoff wurden bei 120 °C binnen 9 h 228 kg Propylenoxid dosiert. Nach Beendigung der Nachreaktionsphase wurde das Rohpolyol neutralisiert, indem 2 % Wasser und 5 % Macrosorb^{®}; bezogen auf den Gesamtansatz, dosiert wurden. Das Wasser wurde im Vakuum bis zu einem Wassergehalt von 0,02 Gew.-% abgetrennt und der Feststoff über einen Tiefenfilter abgetrennt. Das Produkt wies eine OH-Zahl von 141,3 mg KOH/g auf, die Alkalität lag unter der Nachweisgrenze von 1 ppm K.

Dieses Propoxylat diente zur Suspendierung des DMC-Katalysators, hergestellt gemäß Beispiel 1 von EP862947. 10 kg Propoxylat wurden vorgelegt, der feuchte Filterkuchen dosiert und die Suspension mittels eines UltraTurrax^{®} ca. 20 min dispergiert. Anschließend wurde die Suspension im Vakuum ca. 4 Stunden bei 10 mbara getrocknet. Die trockene Suspension wies einen Katalysatorgehalt von 6,63 Masse-% auf.

9,75 kg dieses mittels KOH-Katalyse hergestellten Propoxylats wurden in einem 250 kg Reaktor (max. 10 barg) vorgelegt und 0,377 kg DMC-Suspension dosiert. Der Reaktor wurde mittels Stickstoff inertisiert und auf 130 °C aufgeheizt. Anschließend wurden innerhalb von 4 Stunden parallel Glyzerin/Diethylenglykol-Gemisch (Glyzerin: 2,51 kg, DEG: 0,966) und Propylenoxid (74,27 kg) dosiert. Es schloss sich ein reiner Propylenoxid-Block an (122,49 kg), der innerhalb von 2 h dosiert wurde. Dieses Zwischenprodukt wies eine OH-Zahl von 30,08 mg KOH/g auf.

Es wurde die gleiche Strömungsrohr-Apparatur wie in Beispiel 1 verwendet.

Das hergestellte Propoxylat mit der OH-Zahl von 30,08 mg KOH/g wurde über eine Zahnradpumpe mit einer Dosiergeschwindigkeit von 1,5 kg/h in das Strömungsrohr bei einer Temperatur von 130 °C dosiert. An den fünf Dosierstellen wurden konstante EO/PO-Verhältnisse eingestellt. Die Dosiergeschwindigkeiten von PO und EO an jeder Einspritzstelle lagen bei konstant 24,0 (PO) bzw. 56,0 (EO) g/h. Bei der letzten Einspritzstelle wurde die Dosiermenge reduziert, um die notwendige OH-Zahl erreichen zu können; das Verhältnis von PO zu EO blieb konstant. Es konnte keine lokale Temperaturerhöhung nachgewiesen werden. Das Produkt am Ende des Strömungsrohrreaktors wurde in einem Entgasungsbehälter (10 L) aufgefangen, der bei einem Druck von 200 mbara und einer Temperatur von 130 °C betrieben wurde. Hieraus wurde das entgaste Produkt absatzweise in einen weiteren Entgasungsbehälter (10 L, p= 10 mbara, T= 130 °C) gesaugt und schließlich entleert. Das fertige Produkt wies eine OH-Zahl von 28,3 mg KOH/g, eine Viskosität von 1403 mPas und einen Gehalt an primären OH-Gruppen von 21 mol-% auf. Die Messung des EO-Gehalts mittels ¹H-NMR-Spektroskopie ergab einen Wert von 13,7 Ma-%. Das Produkt war stark trübe und der Einsatz im HR-Schaumstoff führte zum Schaumkollaps.

### Beispiel 4 - (Erfindungsgemäß)

Es wurden die gleiche Apparatur und die gleichen Reagenzien wie in Beispiel 3 verwendet. Allerdings wurden im Strömungsrohrreaktor lokal unterschiedliche Verhältnisse von Ethylenoxid und Propylenoxid dosiert, die in Tabelle 1 zusammengefasst sind. Das Profil der Dosierung wurde so eingestellt, dass der Anteil an EO zum Ende der Dosierung zunahm.

Das resultierende Polyol wies eine OH-Zahl von 27,8 mg KOH/g auf, einen Gehalt an primären Hydroxylgruppen von 31 mol-%, einen Ethylenoxid-Gehalt von 14,2 Ma-% und eine Viskosität von 1485 mPas auf.

Das klare Polyol ließ sich problemlos in HR-Schaumrezepturen verarbeiten.

### Beispiel 5 - (Erfindungsgemäß)

Es wurde ein kontinuierlich betriebener Rührkesselreaktor mit einem Volumen von 2 Litern verwendet. Die Glyzerin/Diethylenglykol-Mischung und das Propylenoxid wurden über getrennte Tauchrohre dosiert. Der DMC-Katalysator wurde in dem mittels semi-batch Technologie gemäß Beispiel 1 hergestellten Vorprodukt mit einer OH-Zahl von 37,8 mg KOH/g suspendiert. Es ergab sich eine Konzentration des DMC-Katalysators von 6,21 %. Die Dosierungen von Starter, Katalysatorsuspension und Propylenoxid erfolgten über HPLC-Pumpen. Der Strömungsrohrreaktor im zweiten Teil der Reaktion entsprach demjenigen, der in Beispielen 1-4 verwendet wurde.

Der Reaktor wurde für den Start der Reaktion mit 1,3 kg des mittels semi-batch Technologie hergestellten Vorprodukts (s. Beispiel 1) mit einer OH-Zahl von 37,8 mg KOH/g gefüllt und auf 120 °C aufgeheizt. Anschließend wurde zunächst die Dosierung der Katalysatorsuspension zugeschaltet (3,26 g/h). Danach wurden zunächst Propylenoxid (1,462 kg/h und schließlich Starter (Glyzerin 25,3 g/h, Diethylenglykol 9,73 g/h) dosiert. Nachdem im Reaktor ein Füllstand von ca. 1,5 Litern erreicht wurde, wurde das Ablassventil geöffnet und der Reaktorinhalt über eine Zahnradpumpe in den Rohrreaktor gefördert. Die Kontrolle des Durchflusses erfolgte über einen Massendurchflussregler im Reaktorabfluss. Über den Vergleich der Zuläufe mit der ausgetragenen Produktmenge wurde der Füllstand kontrolliert.

Der Rohrreaktor wurde wie in Beispiel 2 betrieben, d.h. die relativen Ethylenoxid-Konzentrationen an den fünf Dosierstellen nahmen zu, gemäß Tabelle 1.

Das klare Produkt wies eine OH-Zahl von 27,5 mg KOH/g auf, einen Gehalt an primären Hydroxylgruppen von 22 mol-%, einen Ethylenoxid-Gehalt von 10,5 Ma-% und eine Viskosität von 1521 mPas auf.

Die Verarbeitung im HR-Schaumstoff gelang problemlos.

**Tabelle 1. Zusammensetzungen der AO-Dosierströme an den Dosierstellen.**

| Versuch | Dosiergeschwindigkeit an Dosierstelle # in g/h | | | | | | | | | |
|---|---|---|---|---|---|---|---|---|---|---|
| | 1 | | 2 | | 3 | | 4 | | 5 | |
| Beispiel 1 | PO | 69,7 | PO | 69,7 | PO | 69,7 | PO | 69,7 | PO | 53,5¹⁾ |
| | EO | 42,3 | EO | 42,3 | EO | 42,3 | EO | 42,3 | EO | 33,46¹⁾ |
| Beispiel 2 | PO | 116,8 | PO | 90,8 | PO | 64,9 | PO | 38,9 | PO | 13,0 |
| | EO | 40,5 | EO | 40,5 | EO | 40,5 | EO | 40,5 | EO | 40,5 |
| Beispiel 3 | PO | 24,0 | PO | 24,0 | PO | 24,0 | PO | 24,0 | PO | 16,5¹⁾ |
| | EO | 56,0 | EO | 56,0 | EO | 56,0 | EO | 56,0 | EO | 38,5¹⁾ |
| Beispiel 4 | PO | 40,5 | PO | 31,5 | PO | 22,5 | PO | 13,5 | PO | 4,5 |
| | EO | 10,5 | EO | 31,5 | EO | 52,5 | EO | 73,5 | EO | 94,5 |
| Beispiel 5 | PO | 116,8 | PO | 90,8 | PO | 64,9 | PO | 38,9 | PO | 13,0 |
| | EO | 40,5 | EO | 40,5 | EO | 40,5 | EO | 40,5 | EO | 40,5 |

| | | | | | | | | | | |
|---|---|---|---|---|---|---|---|---|---|---|
| ¹⁾ Reduzierung der Massenströme zur Erreichung der Ziel-OH-Zahl | | | | | | | | | | |

## Patentansprüche

1. Verfahren zur Herstellung von Polyetheralkoholen durch Anlagerung von Alkylenoxiden an H-funktionelle Startsubstanzen unter Verwendung von DMC-Katalysatoren, **dadurch gekennzeichnet, dass** in einem ersten Schritt Propylenoxid oder ein Gemisch aus Propylenoxid und Ethylenoxid an H-funktionelle Startsubstanzen angelagert wird und in einem zweiten Schritt das so entstandene Produkt in einen Rohrreaktor überführt wird, in dem an mindestens zwei Dosierstellen Gemische aus Ethylenoxid und Propylenoxid zudosiert werden, wobei die Anteile von Ethylenoxid und Propylenoxid in den im ersten und im zweiten Schritt zudosierten Gemischen unterschiedlich sind, im zweiten Schritt die Anteile von Ethylenoxid und Propylenoxid in den zudosierten Gemischen an mindestens zwei Dosierstellen unterschiedlich sind und das im zweiten Schritt dosierte Gemisch zumindest an der letzten Dosierstelle mindestens 40 Gew.-% Ethylenoxid enthält.

2. Verfahren nach Anspruch 1, **dadurch gekennzeichnet, dass** die Anzahl der Dosierstellen im zweiten Schritt 2 bis 10 beträgt.

3. Verfahren nach Anspruch 1, **dadurch gekennzeichnet, dass** die Anzahl der Dosierstellen im zweiten Schritt 3 bis 8 beträgt.

4. Verfahren nach Anspruch 1, **dadurch gekennzeichnet, dass** die Anzahl der Dosierstellen im zweiten Schritt 4 bis 6 beträgt.

5. Verfahren nach Anspruch 1, **dadurch gekennzeichnet, dass** der Anteil an Ethylenoxid in den im zweiten Schritt zudosierten Gemischen mit fortlaufender Reaktion zunimmt.

6. Verfahren nach Anspruch 1, **dadurch gekennzeichnet, dass** vor den Dosierstellen für die Alkylenoxide im zweiten Schritt in den Rohrreaktor statische Mischer eingebaut werden.

7. Verfahren nach Anspruch 1, **dadurch gekennzeichnet, dass** die Polyetheralkohole einen Gehalt an Ethylenoxid von 3 bis 50 Gew.-% aufweisen.

8. Verfahren nach Anspruch 1, **dadurch gekennzeichnet, dass** im ersten Schritt 40 bis 98 Gew.-% der gesamten Menge an Alkylenoxid eingesetzt wird.

9. Verfahren nach Anspruch 1, **dadurch gekennzeichnet, dass** der erste Schritt kontinuierlich durchgeführt wird.

10. Verfahren nach Anspruch 1, **dadurch gekennzeichnet, dass** der erste Schritt batchweise durchgeführt wird.

## Claims

1. A process for preparing polyether alcohols by adding alkylene oxides onto H-functional starter substances using DMC catalysts, which comprises, in a first step, adding propylene oxide or a mixture of propylene oxide and ethylene oxide onto H-functional starter substances and, in a second step, transferring the product thus formed into a tubular reactor in which mixtures of ethylene oxide and propylene oxide are metered in at at least two metering points, the proportions of ethylene oxide and propylene oxide in the mixtures metered in in the first and in the second step being different, the proportions of ethylene oxide and propylene oxide in the mixtures metered in at at least two metering points in the second step being different, and the mixture metered in in the second step, at least at the last metering point, comprising at least 40% by weight of ethylene oxide.

2. The process according to claim 1, wherein the number of metering points in the second step is from 2 to 10.

3. The process according to claim 1, wherein the number of metering points in the second step is from 3 to 8.

4. The process according to claim 1, wherein the number of metering points in the second step is from 4 to 6.

5. The process according to claim 1, wherein the proportion of ethylene oxide in the mixtures metered in in the second step increases with continuing reaction.

6. The process according to claim 1, wherein static mixers are installed into the tubular reactor upstream of the metering points for the alkylene oxides in the second step.

7. The process according to claim 1, wherein the polyether alcohols have a content of ethylene oxide of from 3 to 50% by weight.

8. The process according to claim 1, wherein from 40 to 98% by weight of the total amount of alkylene oxide is used in the first step.

9. The process according to claim 1, wherein the first step is carried out continuously.

10. The process according to claim 1, wherein the first step is carried out batchwise.

## Revendications

1. Procédé de fabrication de polyétheralcools en fixant des oxydes d'alkylène sur des substances de départ à fonctionnalité H en utilisant des catalyseurs DMC, **caractérisé en ce que**, dans une première étape, de l'oxyde de propylène ou un mélange d'oxyde de propylène et d'oxyde d'éthylène est fixé sur des substances de départ à fonctionnalité H et, dans une deuxième étape, le produit ainsi obtenu est transféré à un réacteur tubulaire, dans lequel, en au moins deux points de dosage, on ajoute de manière dosée des mélanges d'oxyde d'éthylène et d'oxyde de propylène, dans lequel les fractions d'oxyde d'éthylène et d'oxyde de propylène des mélanges ajoutés de manière dosée dans la première et la deuxième étape sont différentes, dans la deuxième étape, les fractions d'oxyde d'éthylène et d'oxyde de propylène des mélanges ajoutés de manière dosée en au moins deux points de dosage sont différentes et le mélange dosé dans la deuxième étape contient au moins au dernier point de dosage au moins 40 % en poids d'oxyde d'éthylène.

2. Procédé selon la revendication 1, **caractérisé en ce que** le nombre de points de dosage dans la deuxième étape est de 2 à 10.

3. Procédé selon la revendication 1, **caractérisé en ce que** le nombre de points de dosage dans la deuxième étape est de 3 à 8.

4. Procédé selon la revendication 1, **caractérisé en ce que** le nombre de points de dosage dans la deuxième étape est de 4 à 6.

5. Procédé selon la revendication 1, **caractérisé en ce que** la fraction d'oxyde d'éthylène dans les mélanges ajoutés de manière dosée dans la deuxième étape augmente au fur et à mesure que la réaction progresse.

6. Procédé selon la revendication 1, **caractérisé en ce que**, devant les points de dosage des oxydes d'alkylène dans la deuxième étape, des mélangeurs statiques sont intégrés au réacteur tubulaire.

7. Procédé selon la revendication 1, **caractérisé en ce que** les polyétheralcools présentent une teneur en oxyde d'éthylène de 3 à 50 % en poids.

8. Procédé selon la revendication 1, **caractérisé en ce que**, dans la première étape, on utilise 40 à 98 % en poids de la quantité totale d'oxyde d'alkylène.

9. Procédé selon la revendication 1, **caractérisé en ce que** la première étape est réalisée en continu.

10. Procédé selon la revendication 1, **caractérisé en ce que** la première étape est réalisée en discontinu.
